# EUROPEAN PATENT SPECIFICATION

(11) **EP 2 881 887 B1**
(45) Date of publication and mention of the grant of the patent: **25.04.2018**
(21) Application number: 14162552.5
(22) Date of filing: 31.03.2014
(51) Int. Cl.: G06F 21/62

(54) **System and method of applying access rules to files transmitted between computers**
System und Verfahren zur Anwendung von Zugriffsregeln auf zwischen Computern übertragenen Dateien
Système et procédé d'application de règles d'accès aux fichiers transmis entre des ordinateurs

(30) Priority: 05.12.2013 RU 2013153765; 13.03.2014 US 201414209210
(43) Date of publication of application: 10.06.2015
(73) Proprietor: Kaspersky Lab, ZAO, Moscow 125212 (RU)
(72) Inventor: MAKAROV, Alexander N., 125212 Moscow (RU); STROGOV, Vladimir V., 125212 Moscow (RU); KIRIKOVA, Evgeniya P., 125212 Moscow (RU)
(74) Representative: Sloboshanin, Sergej

(56) References cited:
- WO-A2-2012/016091
- US-A1- 2007 156 659
- US-A1- 2009 249 436
- US-A1- 2010 100 939
- US-A1- 2011 162 040

## Description

### Technical Field

The disclosure relates generally to the field of computer security and, more specifically, to systems, method and computer program products for protecting computers and data against unauthorized access by applying access rules to files transmitted between computers.

### Background

The demands for information security of computer devices connected to corporate networks are constantly growing. Theft and loss of data from corporate networks are on the rise, and the resulting financial losses inflict substantial harm to businesses. Due to vulnerabilities in the software and the human factor, data transmitted in a seemingly secure manner on a corporate network can be intercepted by hackers. Therefore, it is desirable to encrypt data transmitted between corporate workstations, notebooks and mobile devices.

The classic system for encryption of files and contents of the directories on a computer operates in accordance with encryption policies. Generally, these policies determine the sets of files that must be encrypted and the files that do not require encryption. In such a system, the most vulnerable and critical files (such as files containing confidential information whose loss is undesirable to its owner) on a disk are present in encrypted form. In corporate networks it is often possible to gain access by means of one computer on the network to the files of another computer. Despite the convenience of exchanging data between computers on the network, such a method has certain inadequacies in regard to protecting the data being transmitted - the files are transmitted in unencrypted form. To solve this problem, an encrypted data transmission channel is used or the files are transmitted in encrypted form.

Existing data encryption systems provide for a secure exchange of data between computers with the use of encryption methods, but this entails an additional computing burden on the processor of the user device. Another drawback of existing data encryption systems is a lack of proper checking of the level of trust of the party requesting access to important files.

The document WO 2012/016091 refers to a system which protects documents at rest and in motion using declarative policies and encryption. A document at rest includes documents on a device such as the hard drive of a computer. A document in motion is a document that is passing through a policy enforcement point. The policy enforcement point can be a server, e.g., mail server, instant messenger server, file server, or network connection server.

The document US 2007/156659 discloses an information management system, in which relevant policies are deployed to targets while policies which are not relevant are not. The policies allow policy enforcers (which may be called agents in specific embodiments) to make decisions on whether to allow or deny access to a particular information, execute a particular application function, or operate on a particular application data object or fragment. By deploying relevant policies, this reduces the amount of space requirements at the target to store the policies and the amount of data that needs to be sent to the target. Also, execution speed at the target may increase since the target does not need to evaluate policies that are not relevant.

Thus, the need arises for a solution that increases the security of data transmission on a corporate network without unduly increasing computing burdens on the user devices.

### Summary

The present invention relates to systems, methods and computer program products for protecting computer equipment and data of end users against unauthorized access. The scope of protection of the invention is defined by the claims.

### Brief Description of the Drawings

The accompanying drawings, which are incorporated into and constitute a part of this specification, illustrate one or more example aspects of the invention and, together with the detailed description, serve to explain their principles and implementations.
Fig. 1A shows an aspect of an example system for protecting computer equipment and data against unauthorized access.
Fig. 1B shows another aspect of an example system for protecting computer equipment and data against unauthorized access.
Fig. 2 shows an aspect of an example method for protecting computer equipment and data against unauthorized access.
Fig. 3 shows a sample of the application of rules of access to computer files.
Fig. 4 shows an example of a general-purpose computer system on which systems and methods for protecting computer equipment and data against unauthorized access may be implemented.

### Detailed Description

Example aspects are described herein in the context of a system, method and computer program product for protecting computer equipment and data from unauthorized access. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

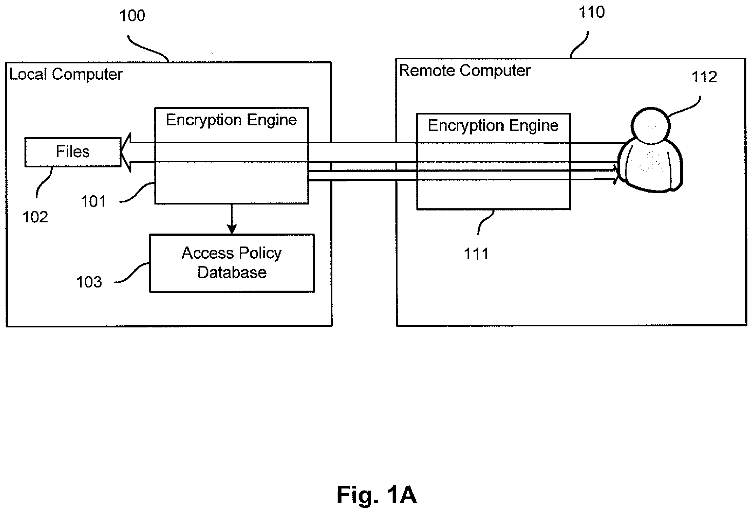

**Fig. 1A** shows an example system for protecting computer equipment and data from unauthorized access. The system includes a local computer 100 and a remote computer 110. The local computer 100 may include an encryption engine 101, which serves to intercept requests to obtain access to files 102 of the local computer 100 arriving from a user 112 of the remote computer 110, and also to ascertain the parameters of the following objects: the user 112 of the remote computer 110, the file being requested, the remote computer 110, etc.

The parameters of the user 112 of the remote computer 110 may include, but not limited to, user account rights and user's role in the company (e.g., administrator, security officer, accountant, programmer, etc). The file parameters may include, but not limited to: an indicator of whether or not the file is encrypted; the file type (such as text with extension "txt", text with extension "doc"); the hash sum of the file; and file attributes. The parameters of the remote computer 110 may include, but not limited to: indicators determining for each of the disks whether or not the disk is encrypted; the security level; the type of disk encryption - file level or full disk encryption. The security level may take on discrete values and depend on the date of the last updating of the antivirus database, the presence of unpatched vulnerabilities on the computer, the date of the last antivirus check and the result of this check (for example, the number of malicious programs neutralized, i.e., repaired or removed programs, the number of files infected, etc.), and also the list of installed applications. For example, the security level can be expressed in a percent, where 100% represents the highest level of security, in which the latest update of the antivirus database has been installed on the computer, there are no vulnerabilities, and no file has been infected. By the same token, 0% represents the opposite situation, in which the antivirus database is outdated, there are numerous vulnerabilities and infected files.

The encryption engine 101 of the local computer 100 may be also operable to transmit the established file access rules to the encryption engine 111 of the remote com-computer 110. The encryption engine 111 of the remote computer 110 is designed to intercept the opening of files 102 by the user 112 of the remote computer 110, and also to apply file access rules to files of the local computer 100 depending on the established parameters of the objects. These access rules may include, but not limited to: prohibiting access, granting transparent access to an encrypted file (i.e., the file will be decrypted and presented to the user 112 in clear text), or granting access to ciphertext.

The local computer 100 also includes a database of access policies 103, connected to the encryption engine 101 and containing access rules to the files 102 of the local computer 100 for the remote computer 110 depending on the parameters of the objects.

The encryption engine 111 of the remote computer 110 may additionally provide the parameters of the remote computer 110 and the user 112 of the remote computer 110 to the encryption engine 101 of the local computer 100. The user parameters may include, for example, the user's account rights on the remote computer 110.

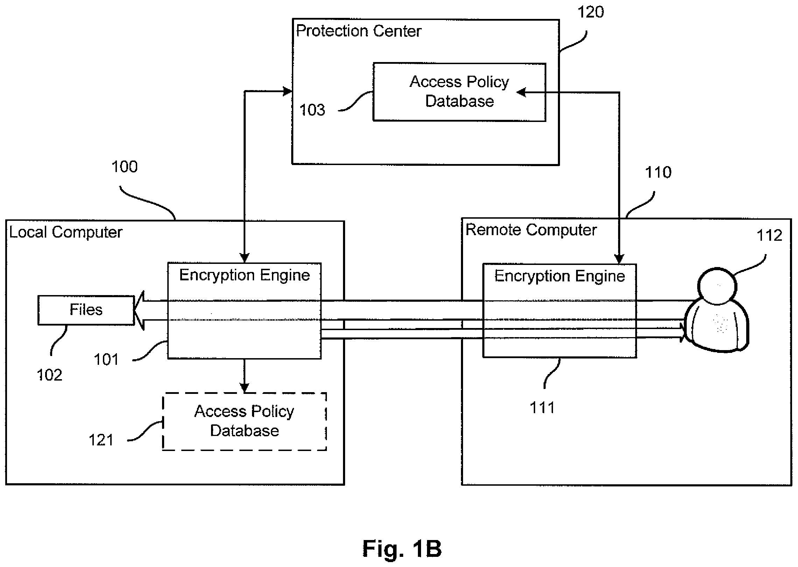

**Fig. 1B** shows another example system for protecting computer equipment and data from unauthorized access. The system may include all the elements presented above in Fig. 1A, and may also include a protection center 120, connected to the encryption engines 101, 111 of the local and remote computers 100, 110, respectively. The protection center 120 serves to designate the access policies, and also to exchange file encryption keys of the local computer 100 with the local and remote computers 100, 110. The protection center 120 may contain a database of access policies 103, as described above. The encryption engine 101 may consult the database of access policies 103 via the protection center 120. The system may additionally contain an auxiliary database of access policies 121, connected to the encryption engine 101 and designed to store the most requested access policies from the database 103. The database of access policies 103 may be further operable to store the parameters of the objects.

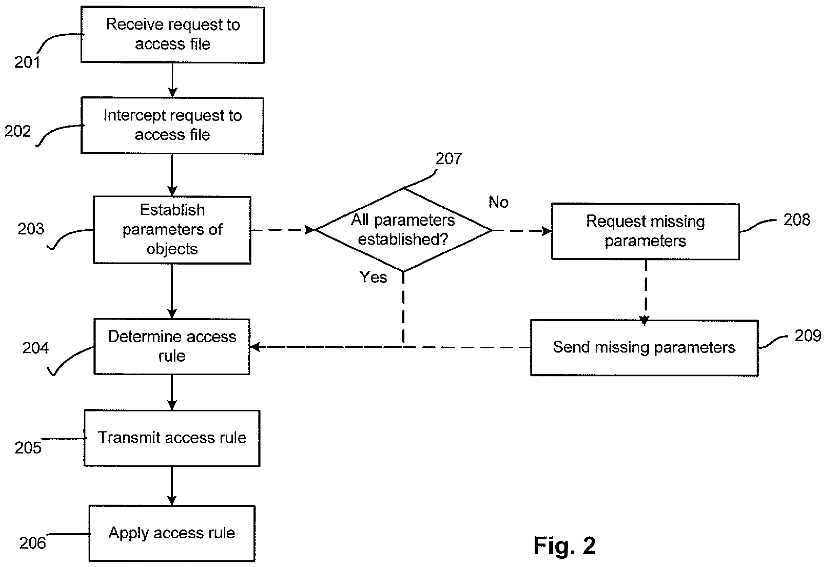

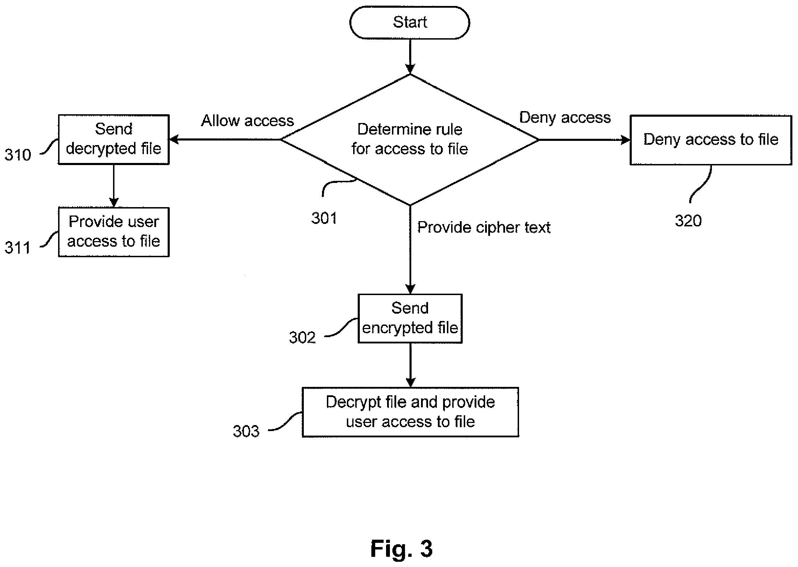

**Fig. 2** shows an example method of implementing the present invention in the context of the system shown in Fig. 1A. In a first step 201, the user 112 of the remote computer 110 requests access to a file 102 (for example, it tries to open, copy, or alter a file) of the local computer 100. In step 202, the encryption engine 101 of the local computer 100 intercepts the request of the user 112 to obtain access to the file. In the next step 203, the encryption engine 101 of the local computer 100 establishes the parameters of the objects, such as, for example, the user 112 of the remote computer 110, the file being requested, the remote computer 110. The next step will be 204, in which the encryption engine 101 of the local computer 100 in accordance with the established parameters of the objects determines the access rule by means of the access policy database 103. In step 205, the encryption engine 101 transmits this rule to the encryption engine 111 of the remote computer 110. As a result, in step 206, the encryption engine 111 of the remote computer 110 applies the obtained access rule to the file being requested 102 of the local computer 100. The procedure for applying the access rules, to be performed in step 206, will be disclosed in detail below in the description for Fig. 3.

Following step 203 there can occur an additional step 207, in which the encryption engine 101 of the local computer 100 checks whether all necessary parameters have been established. In certain situations, some of the parameters cannot be established on the local computer 100, although they can be established on the remote computer 110. For example, the encryption engine 101 of the local computer 100 cannot determine the account rights of the remote computer 110 if the remote computer 110 itself does not furnish this information. Thus, if all necessary parameters have been established in step 207, the flow chart returns to step 204. Otherwise, in step 208, the encryption engine 101 of the local computer 100 requests the missing parameters from the encryption engine 111 of the remote computer 110, which sends them back in the next step 209. As a result, the flow chart returns to step 204, as described above in detail.

Table 1 below presents an example of the content of the database of access policies. The database of access policies can constitute a table, the rows of which contain the access rules. For each rule there are defined the conditions of its occurrence and the action performed by the encryption engine 101 of the local computer 100 when this rule is selected. The rules in the table are kept in order of decreasing priority, so that if several rules fall under a specified condition, the rule with the highest priority will be selected.

**Table 1**

| Nº | Condition | Action |
|---|---|---|
| 1 | Hash sum on the black list | Prohibit access |
| 2 | Hash sum is found on the list of mandatory encryption files | Provide cipher text |
| 3 | a. File contains the "system" attribute, | Provide cipher text |
| | b. security level > 90%, | |
| | c. user account rights - personal computer (PC) administrator | |
| 4 | File contains the "system" attribute | Prohibit access |
| 5 | File contains the "read only" attribute, the system disk of the remote PC is encrypted | Provide cipher text |
| 6 | File contains the "read only" attribute | Prohibit access |

In Table 1, the first rule has the highest priority and the last rule the lowest. The database of access policies may additionally contain black lists of hash sums of files which are critically important or confidential files. Access to such files by the user 112 of the remote computer 110 will be prohibited according to the first rule of Table 1. The database of access policies may contain a list of mandatory encryption files, which keeps the hash sums of files that are kept in encrypted form on the local computer 100. According to rule No. 2 of Table 1, such files will be furnished to the remote computer 110 in encrypted form.

In the present example, if a file is a system file and at the same time the security level of the remote computer 110 is greater than 90%, and also if the user 112 of this computer has administrator rights, then the file will be presented to the remote computer 110 in the form of cipher text. However, if even one of conditions "a" to "c" is not fulfilled, this rule will not be used. For example, if a particular file is also a system file, but the security level of the remote computer 110 is equal to 85%, the harsher rule No. 4 will be applied, whereby access to the file will be prohibited.

Similarly, if the file contains the "read only" attribute, it comes under rule No. 5 if it is additionally known that the system disk on the remote computer 110 is encrypted (thus increasing the security of the computer). Otherwise, if the system disk on the remote computer 110 is not encrypted, the next lower priority rule No. 6 will be carried out.

If none of conditions 1-6 is fulfilled, a default rule may be applied, such as allowing access to the file.

The access policies may be designated and changed periodically by the administrator of the local computer 100. In step 204 the encryption engine 101 of the local computer 100 can allow the user 112 of the local computer 100 to select the access rule manually.

The access policies may be changed based on various additional conditions, such as, for example, the time of day and the account rights of the user 112 of the local computer 100. For example, during business hours one set of access policies may be used, and during nonbusiness hours another set.

If the system shown in Fig. 1B is used, in step 204 the encryption engine 101 requests access rules from the protection center 120, which in turn provides the access rules to the encryption engine 101 according to the database of access policies 103. In step 208, the encryption engine 101 of the local computer 100 may request the missing parameters of the objects in the database 103, and if there are none in the database 103 either, the protection center 120 in turn may request them from the encryption engine 111 of the remote computer 110 and keeps them in the database 103. Some of the database of access policies 103 may be kept in an auxiliary database 121. In this case, the encryption engine 101 will determine the access rules with the aid of the auxiliary database 121.

**Fig. 3** shows an example of the use of rules of access to the files of a computer. In step 301 the rule for access to the file being requested is determined. If the access rule is prohibitory, then in step 320 access to the file is blocked. The user 112 of the remote computer 110 may be sent a message as to the reason for prohibiting access. The user 112 of the remote computer 110 may be asked to enter a password for access to the file.

If the selected access rule allows the file to be presented in decrypted form, the next step will be 310, in which the encryption engine 101 of the local computer 100 sends the file to the encryption engine 111 of the remote computer 110, which in turn presents it to the user 112 of the computer in step 311.

If an access rule is selected whereby the file should be presented in the form of cipher text, the flow chart continues in step 302. If the file was originally encrypted, it is sent on to the remote computer 110. But if the file was not encrypted, the encryption engine 101 of the local computer 100 may encrypt the file before sending it to the remote computer 110. In step 303, the remote computer 110 receives the file, decrypts it and presents it to the user 112. A symmetrical encryption may be used for encrypting the files, in which the encryption engines 101, 111 of the local and remote computers 100, 110 previously exchange the key that will be used for both encryption and decryption of the data. A public-key encryption scheme may be used, in which the encryption engines 101, 111 of the local and remote computers 100, 110 have one public key and one private key each. Thus, for example, the encryption engine 101 of the local computer 100 can encrypt files with the public key of the encryption engine 111 of the remote computer 110. Thus, such a file can only be decrypted by the remote computer 110 using its private key.

The protection center 120 can participate in the file transfer process. For example, the encryption engine 101 of the local computer 100 can encrypt a file by means of a certain "file key", which is then encrypted by the public key of the protection center 120 and placed in the metadata of the file. Thus, the encryption engine 111 of the remote computer 110 can extract the encrypted "file key" from the metadata of the file and send it to the protection center 120, which decrypts it by its private key and sends it back to the remote computer 110. The protection center 120 may not decrypt the "file key", even if the file should be presented in open form according to the access rule. Such an outcome is possible, for example, if the remote computer 110 has been hacked and information about the hacking has succeeded in reaching the protection center 120, but the database of access policies 103 was not updated. The protection center 120 may contain a copy of the database of access policies 121 and use it for an additional checking of the rules of access of the remote computer 110 to the files of the local computer 100. For example, two possible access rules may be determined for the file being requested: to provide the decrypted file during business hours; to provide cipher text the rest of the time. Thus, if the file was sent by the encryption engine 101 at the end of the work day, but on account of the large size of the file it was already outside business hours when the remote computer 110 received it, the protection center 120 will not provide the decrypted "file key" to the encryption engine 111, since the rule for access to the file has changed.

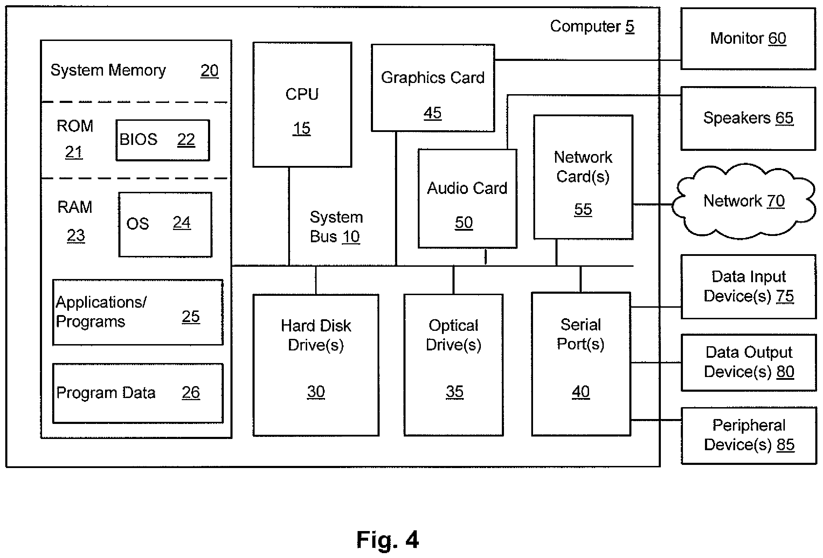

**Fig. 4** depicts an example configuration of a general-purpose computer 5 that can be used to implement the disclosed system and methods for protecting computer equipment and data from unauthorized access. The computer system 5 may include, but not limited to, a personal computer, a notebook, tablet computer, a smart phone, a network server, a router, or other type of computing device. As shown, computer system 5 may include one or more hardware processors 15, system memory 20, one or more hard disk drive(s) 30, optical drive(s) 35, serial port(s) 40, graphics card 45, audio card 50 and network card(s) 55 connected by system bus 10. System bus 10 may be any of several types of bus structures including a memory bus or memory controller, a peripheral bus and a local bus using any of a variety of known bus architectures. Processor 15 may include one or more Intel® Core 2 Quad 2.33 GHz processors or other type of microprocessor.

System memory 20 may include a read-only memory (ROM) 21 and random access memory (RAM) 23. Memory 20 may be implemented as in DRAM (dynamic RAM), EPROM, EEPROM, Flash or other type of memory architecture. ROM 21 stores a basic input/output system 22 (BIOS), containing the basic routines that help to transfer information between the components of computer system 5, such as during start-up. RAM 23 stores operating system 24 (OS), such as Windows® XP Professional or other type of operating system, that is responsible for management and coordination of processes and allocation and sharing of hardware resources in computer system 5. Memory 20 also stores applications and programs 25. Memory 20 also stores various runtime data 26 used by programs 25.

Computer system 5 may further include hard disk drive(s) 30, such as SATA HDD, and optical disk drive(s) 35 for reading from or writing to a removable optical disk, such as a CD-ROM, DVD-ROM or other optical media. Drives 30 and 35 and their associated computer-readable media provide non-volatile storage of computer readable instructions, data structures, applications and program modules/subroutines that implement algorithms and methods disclosed herein. Although the exemplary computer system 5 employs magnetic and optical disks, it should be appreciated by those skilled in the art that other types of computer readable media that can store data accessible by a computer system 5, such as magnetic cassettes, flash memory cards, digital video disks, RAMs, ROMs, EPROMs and other types of memory may also be used in alternative aspects of the computer system 5.

Computer system 5 further includes a plurality of serial ports 40, such as Universal Serial Bus (USB), for connecting data input device(s) 75, such as keyboard, mouse, touch pad and other. Serial ports 40 may be also be used to connect data output device(s) 80, such as printer, scanner and other, as well as other peripheral device(s) 85, such as external data storage devices and the like. System 5 may also include graphics card 45, such as nVidia® GeForce® GT 240M or other video card, for interfacing with a monitor 60 or other video reproduction device. System 5 may also include an audio card 50 for reproducing sound via internal or external speakers 65. In addition, system 5 may include network card(s) 55, such as Ethernet, WiFi, GSM, Bluetooth or other wired, wireless, or cellular network interface for connecting computer system 5 to network 70, such as the Internet.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various aspects, the systems and methods are described in the present disclosure in terms of engines. The term "engines" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the engine's functionality, which (while being executed) transform the microprocessor system into a special-purpose device. An engine may also be implemented as a combination of the two, with certain functions facilitated by hardware alone, and other functions facilitated by a combination of hardware and software. In certain implementations, at least a portion, and in some cases, all, of an engine may be executed on the processor of a general purpose computer (such as the one described in greater detail in Fig. 4 above). Accordingly, each engine can be realized in a variety of suitable configurations, and should not be limited to any particular implementation exemplified herein.

In the interest of clarity, not all of the routine features of the aspects are disclosed herein. It will be appreciated that in the development of any actual implementation of the invention, numerous implementation-specific decisions must be made in order to achieve the developer's specific goals, and that these specific goals will vary for different implementations and different developers. It will be appreciated that such a development effort might be complex and time-consuming, but would nevertheless be a routine undertaking of engineering for those of ordinary skill in the art having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

## Claims

1. A method for providing access to computer files (102), the method comprising:
receiving, by an encryption engine (101) on a local computer, from a remote computer (110), a request to access a file (102);
in response to receiving (201) the request to access the file (102) from the remote computer (110),
determining (203), by the encryption engine (101), one or more parameters of each of the requested files (102), the remote computer (110) and a user (112) of the remote computer (110), wherein the parameters of the remote computer (110) include one or more of an indicator of whether a computer's disk is encrypted or unencrypted, a type of disk encryption, and the computer's security level, wherein the security level of the remote computer (110) depends on the date of the last updating of the antivirus database, the presence of unpatched vulnerabilities on the computer, the date of the last antivirus check and the result of this check as well as a list of installed applications;
determining (204), based on the determined parameters of each of the requested files (102), the remote computer (110) and a user (112), an access rule for the requested file that specifies encryption requirements for the requested file (102), wherein the determining (204) includes applying the determined parameters to a plurality of conditions and determining the access rule is based on whether the parameters satisfy the plurality of conditions;
transmitting (205), by the encryption engine (101) of the local computer (100), the determined access rule to the requested file (102) to an encryption engine (111) of the remote computer (110);
performing, by the encryption engine (101) on the local computer (100) and by applying the access rule to the requested file (102), one of sending the requested file (102) as cleartext to the remote computer (110), sending the requested file (102) as ciphertext to the remote computer (110), or denying access to the requested file (102),
when the requested file (102) is sent as ciphertext based on the access rule, extracting, by the encryption engine (111) of the remote computer (110), an encrypted file key from metadata of the requested file (101) and transmitting the encrypted file key to a protection center (120); and
decrypting, by the protection center (120), the encrypted file key based on at least one file access policy (121) and transmitting the decrypted file key to the encryption engine (111) of the remote computer (110) to decrypt and access the ciphertext.

2. The method of claim 1, wherein parameters of the user (112) of the remote computer (110) include one or more of user account rights and a user's role in a company.

3. The method of claim 1, wherein parameters of the requested file (102) include one or more of an indicator of whether the file (102) is encrypted or unencrypted, a file type, a hash sum of the file (102) and one or more attributes of the file (102).

4. The method of claim 1, wherein the type of disk encryption includes one of a Full Disk Encryption (FDE) and a File-Level Encryption (FLE).

5. The method of claim 1, wherein the access rule is determined by applying the parameters to the plurality of conditions and determining a plurality of access rules that are applied in order based on a priority of each access rule, and with access rules having highest priority being applied first.

6. The method of claim 5, wherein the plurality of access rules is based on one of a time of a day, and a user account policy.

7. The method of claim 1, wherein determining the access rule for the requested file (102) is further based on a time of the request being received and a time when the remote computer (110) received the requested file.

8. A system for providing access to computer files (102),
**characterized in that**
the system comprising:
an encryption engine (101) on a local computer (100) configured to:
receive (201), from a remote computer (110), a request to access a file (102);
in response to receiving the request to access the file (102) from the remote computer (110),
determine (203) one or more parameters of each of the requested file (102), the remote computer (110) and a user (112) of the remote computer (110), wherein the parameters of the remote computer (110) include one or more of an indicator of whether a computer's disk is encrypted or unencrypted, a type of disk encryption, and the computer's security level, wherein the security level of the remote computer (110) depends on the date of the last updating of the antivirus database, the presence of unpatched vulnerabilities on the computer, the date of the last antivirus check and the result of this check as well as a list of installed applications;
determine (204), based on the determined parameters of each of the requested files (102), the remote computer (110) and a user (112), an access rule for the requested file (102) that specifies encryption requirements for the requested file (102), wherein the encryption engine (101) determines the access rule by applying the determined parameters to a plurality of conditions and determining the access rule based on whether the parameters satisfy the plurality of conditions;
transmit (205) the determined access rule to the requested file (102) to an encryption engine (111) of the remote computer (110); and
perform by applying the access rule to the requested file (102), one of sending the requested file (102) as cleartext to the remote computer (110), sending the requested file (102) as ciphertext to the remote computer (110), or denying access to the requested file (102),
wherein, when the requested file (102) is sent as ciphertext based on the access rule, the encryption engine (111) of the remote computer (110) extracts an encrypted file key from metadata of the requested file (101) and transmits the encrypted file key to a protection center (120); and
wherein the protection center (120) is configured to decrypt the encrypted file key based on at least one file access policy (121) and to transmitt the decrypted file key to the encryption engine (111) of the remote computer (110) to decrypt and access the ciphertext.

9. The system of claim 8, wherein parameters of the user (112) of the remote computer (110) include one or more of user account rights and a user's role in a company.

10. The system of claim 8, wherein parameters of the requested file (102) include one or more of an indicator of whether the file (102) is encrypted or unencrypted, a file type, a hash sum of the file (102) and one or more attributes of the file (102).

11. The system of claim 8, wherein the type of disk encryption includes one of a Full Disk Encryption (FDE) and a File-Level Encryption (FLE).

12. The system of claim 8, wherein the computer's security level is further determined based on a number of detected malicious programs and a number of repaired or removed malicious programs.

## Patentansprüche

1. Verfahren zum Bereitstellen eines Zugriffs auf Computerdateien (102), wobei das Verfahren umfasst:
Empfangen, durch eine Verschlüsselungs-Engine (101) auf einem lokalen Computer, einer Anforderung zum Zugreifen auf eine Datei (102) von einem entfernten Computer (110);
in Ansprechung auf das Empfangen (201) der Anforderung zum Zugreifen auf die Datei (102) von dem entfernten Computer (110),
Bestimmen (203), durch die Verschlüsselungs-Engine (101), eines oder mehrerer Parameter jeder der angeforderten Dateien (102), des entfernten Computers (110) und eines Benutzers (112) des entfernten Computers (110), wobei die Parameter des entfernten Computers (110) einen Indikator dafür, ob eine Festplatte des Computers verschlüsselt oder unverschlüsselt ist, einen Typ der Festplattenverschlüsselung und/oder das Sicherheitslevel des Computers umfassen, wobei das Sicherheitslevel des entfernten Computers (110) vom Datum der letzten Aktualisierung der Antivirus-Datenbank, dem Vorhandensein von ungepatchten Schwachstellen auf dem Computer, dem Datum der letzten Antivirus-Überprüfung und dem Ergebnis dieser Überprüfung sowie einer Liste der installierten Anwendungen abhängt;
Bestimmen (204), basierend auf den bestimmten Parametern jeder der angeforderten Dateien (102), des entfernten Computers (110) und eines Benutzers (112), einer Zugriffsregel für die angeforderte Datei, die Verschlüsselungserfordernisse für die angeforderte Datei (102) spezifiziert, wobei das Bestimmen (204) ein Anwenden der bestimmten Parameter auf eine Vielzahl von Bedingungen umfasst und das Bestimmen der Zugriffsregel darauf basiert, ob die Parameter die Vielzahl von Bedingungen erfüllen;
Übermitteln (205), durch die Verschlüsselungs-Engine (101) des lokalen Computers (100), der bestimmten Zugriffsregel für die angeforderte Datei (102) zu einer Verschlüsselungs-Engine (111) des entfernten Computers (110);
Durchführen, durch die Verschlüsselungs-Engine (101) auf dem lokalen Computer (100) und durch Anwenden der Zugriffsregel auf die angeforderte Datei (102), eines Sendens der angeforderten Datei (102) als Klartext an den entfernten Computer (110), eines Sendens der angeforderten Datei (102) als Geheimtext an den entfernten Computer (110) oder eines Verweigerns des Zugriffs auf die angeforderte Datei (102),
wenn die angeforderte Datei (102) basierend auf der Zugriffsregel als Geheimtext gesendet wird, Extrahieren, durch die Verschlüsselungs-Engine (111) des entfernten Computers (110) eines verschlüsselten Dateischlüssels aus Metadaten der angeforderten Datei (101) und Übermitteln des verschlüsselten Dateischlüssels zu einem Schutzzentrum (120); und
Entschlüsseln, durch das Schutzzentrum (120), des verschlüsselten Dateischlüssels basierend auf wenigstens einer Dateizugriffsrichtlinie (121) und Übermitteln des entschlüsselten Dateischlüssels an die Verschlüsselungs-Engine (111) des entfernten Computers (110), um den Geheimtext zu entschlüsseln und darauf zuzugreifen.

2. Verfahren nach Anspruch 1, wobei Parameter des Benutzers (112) des entfernten Computers (110) Benutzerkontenrechte und/oder die Aufgabe eines Benutzers in einer Firma umfassen.

3. Verfahren nach Anspruch 1, wobei Parameter der angeforderten Datei (102) einen Indikator, ob die Datei (102) verschlüsselt oder unverschlüsselt ist, einen Dateityp, eine Prüfsumme der Datei (102) und/oder ein oder mehrere Eigenschaften der Datei (102) umfassen.

4. Verfahren nach Anspruch 1, wobei der Typ der Festplattenverschlüsselung eine Festplattenvollverschlüsselung (FDE) oder eine Verschlüsselung auf Datei-Ebene (FLE) umfasst.

5. Verfahren nach Anspruch 1, wobei die Zugriffsregel durch Anwenden der Parameter auf die Vielzahl von Bedingungen und Bestimmen einer Vielzahl von Zugriffsregeln bestimmt wird, die in einer Reihenfolge basierend auf einer Priorität jeder Zugriffsregel angewandt werden, und wobei Zugriffsregeln mit der höchsten Priorität zuerst angewandt werden.

6. Verfahren nach Anspruch 5, wobei die Vielzahl von Zugriffsregeln auf einer Tageszeit oder einer Benutzerkontenrichtlinie basieren.

7. Verfahren nach Anspruch 1, wobei das Bestimmen der Zugriffsregel für die angeforderte Datei (102) ferner auf einer Zeit, zu der die Anforderung empfangen wird, und einer Zeit basiert, wenn der entfernte Computer (110) die angeforderte Datei erhalten hat.

8. System zum Bereitstellen eines Zugriffs auf Computerdateien (102),
**dadurch gekennzeichnet, dass**
das System umfasst:
eine Verschlüsselungs-Engine (101) auf einem lokalen Computer (100), die dazu konfiguriert ist:
von einem entfernten Computer (110) eine Anforderung zum Zugreifen auf eine Datei (102) zu empfangen (201);
in Ansprechung auf das Empfangen der Anforderung zum Zugreifen auf die Datei (102) von dem entfernten Computer (110),
einen oder mehrere Parameter jeder der angeforderten Dateien (102), des entfernten Computers (110) und eines Benutzers (112) des entfernten Computers (110) zu bestimmen (203), wobei die Parameter des entfernten Computers (110) einen Indikator dafür, ob eine Festplatte des Computers verschlüsselt oder unverschlüsselt ist, einen Typ der Festplattenverschlüsselung und/oder das Sicherheitslevel des Computers umfassen, wobei das Sicherheitslevel des entfernten Computers (110) vom Datum der letzten Aktualisierung der Antivirus-Datenbank, dem Vorhandensein von ungepatchten Schwachstellen auf dem Computer, dem Datum der letzten Antivirus-Überprüfung und dem Ergebnis dieser Überprüfung sowie einer Liste der installierten Anwendungen abhängt;
basierend auf den bestimmten Parametern jeder der angeforderten Dateien (102), des entfernten Computers (110) und eines Benutzers (112), eine Zugriffsregel für die angeforderte Datei zu bestimmen (204), die Verschlüsselungserfordernisse für die angeforderte Datei (102) spezifiziert, wobei die Verschlüsselungs-Engine (101) die Zugriffsregel durch Anwenden der bestimmten Parameter auf eine Vielzahl von Bedingungen und Bestimmen der Zugriffsregel basierend darauf, ob die Parameter die Vielzahl von Bedingungen erfüllen, bestimmt;
die bestimmte Zugriffsregel für die angeforderte Datei (102) zu einer Verschlüsselungs-Engine (111) des entfernten Computers (110) zu übermitteln (205); und
durch Anwenden der Zugriffsregel auf die angeforderte Datei (102), ein Senden der angeforderten Datei (102) als Klartext an den entfernten Computer (110), ein Senden der angeforderten Datei (102) als Geheimtext an den entfernten Computer (110) oder ein Verweigern des Zugriffs auf die angeforderte Datei (102) durchzuführen,
wobei, wenn die angeforderte Datei (102) basierend auf der Zugriffsregel als Geheimtext gesendet wird, die Verschlüsselungs-Engine (111) des entfernten Computers einen verschlüsselten Dateischlüssels aus Metadaten der angeforderten Datei (101) extrahiert und den verschlüsselten Dateischlüssel an ein Schutzzentrum (120) übermittelt; und
wobei das Schutzzentrum (120) dazu konfiguriert ist, den verschlüsselten Dateischlüssel basierend auf wenigstens einer Dateizugriffsrichtlinie (121) zu entschlüsseln und den entschlüsselten Dateischlüssel an die Verschlüsselungs-Engine (111) des entfernten Computers (110) zu übermitteln, um den Geheimtext zu entschlüsseln und darauf zuzugreifen.

9. System nach Anspruch 8, wobei Parameter des Benutzers (112) des entfernten Computers (110) Benutzerkontenrechte und/oder die Aufgabe eines Benutzers in einer Firma umfassen.

10. Verfahren nach Anspruch 8, wobei Parameter der angeforderten Datei (102) einen Indikator, ob die Datei (102) verschlüsselt oder unverschlüsselt ist, einen Dateityp, eine Prüfsumme der Datei (102) und/oder ein oder mehrere Eigenschaften der Datei (102) umfassen.

11. Verfahren nach Anspruch 8, wobei der Typ der Festplattenverschlüsselung eine Festplattenvollverschlüsselung (FDE) oder eine Verschlüsselung auf Datei-Ebene (FLE) umfasst.

12. System nach Anspruch 8, wobei das Sicherheitslevel des Computers ferner basierend auf einer Anzahl von detektierten Schadprogrammen und einer Anzahl von reparierten oder entfernten Schadprogrammen bestimmt wird.

## Revendications

1. Un procédé de fourniture d'un accès à des fichiers informatiques (102), le procédé comprenant :
la réception, par un moteur de chiffrement (101) sur un ordinateur local, à partir d'un ordinateur distant (110), d'une demande d'accès à un fichier (102),
en réponse à la réception (201) de la demande d'accès au fichier (102) à partir de l'ordinateur distant (110),
la détermination (203), par le moteur de chiffrement (101), d'un ou de plusieurs paramètres de chaque élément parmi les fichiers demandés (102), l'ordinateur distant (110) et un utilisateur (112) de l'ordinateur distant (110), les paramètres de l'ordinateur distant (110) comprenant un ou plusieurs éléments parmi un indicateur indiquant si un disque d'ordinateur est chiffré ou non chiffré, un type de chiffrement de disque et le niveau de sécurité de l'ordinateur, le niveau de sécurité de l'ordinateur distant (110) dépendant de la date de la dernière mise à jour de la base de données d'antivirus, de la présence de vulnérabilités non corrigées sur l'ordinateur, de la date de la dernière vérification par l'antivirus et du résultat de cette vérification ainsi que d'une liste d'applications installées,
la détermination (204), en fonction des paramètres déterminés de chaque éléments parmi les fichiers demandés (102), l'ordinateur distant (110) et un utilisateur (112), d'une règle d'accès pour le fichier demandé qui spécifie des exigences de chiffrement pour le fichier demandé (102), la détermination (204) comprenant l'application des paramètres déterminés à une pluralité de conditions, et la détermination de la règle d'accès est basée sur le fait que les paramètres satisfont la pluralité de conditions,
la transmission (205), par le moteur de chiffrement (101) de l'ordinateur local (100), de la règle d'accès déterminée au fichier demandé (102) à un moteur de chiffrement (111) de l'ordinateur distant (110),
l'exécution, par le moteur de chiffrement (101) sur l'ordinateur local (100) et par l'application de la règle d'accès au fichier demandé (102), d'une opération parmi l'envoi du fichier demandé (102) en texte clair à l'ordinateur distant (110), l'envoi du fichier demandé (102) en texte chiffré à l'ordinateur distant (110), ou le refus d'accès au fichier demandé (102),
lorsque le fichier demandé (102) est envoyé sous la forme d'un texte chiffré en fonction de la règle d'accès, l'extraction, par le moteur de chiffrement (111) de l'ordinateur distant (110), d'une clé de fichier chiffré de métadonnées du fichier demandé (101) et la transmission de la clé de fichier chiffré à un centre de protection (120), et
le déchiffrement, par le centre de protection (120), de la clé de fichier chiffré en fonction d'au moins une politique d'accès aux fichiers (121) et la transmission de la clé de fichier déchiffré au moteur de chiffrement (111) de l'ordinateur distant (110) de façon à déchiffrer et accéder au texte chiffré.

2. Le procédé selon la revendication 1, dans lequel les paramètres de l'utilisateur (112) de l'ordinateur distant (110) comprennent un ou plusieurs éléments parmi des droits de compte d'utilisateur et une fonction de l'utilisateur dans une compagnie.

3. Le procédé selon la revendication 1, dans lequel les paramètres du fichier demandé (102) comprennent un ou plusieurs éléments parmi un indicateur indiquant si le fichier (102) est chiffré ou non chiffré, un type de fichier, une somme de hachage du fichier (102) et un ou plusieurs attributs du fichier (102).

4. Le procédé selon la revendication 1, dans lequel le type de chiffrement de disque comprend un chiffrement parmi un chiffrement de disque complet (FDE) et un chiffrement de niveau fichier (FLE).

5. Le procédé selon la revendication 1, dans lequel la règle d'accès est déterminée par l'application des paramètres à la pluralité de conditions et la détermination d'une pluralité de règles d'accès qui sont appliquées dans l'ordre en fonction d'une priorité de chaque règle d'accès, et les règles d'accès possédant la priorité la plus élevée étant appliquées en premier.

6. Le procédé selon la revendication 5, dans lequel la pluralité de règles d'accès est basée sur un élément parmi une heure du jour et une politique de compte d'utilisateur.

7. Le procédé selon la revendication 1, dans lequel la détermination de la règle d'accès pour le fichier demandé (102) est basée en outre sur une heure de réception de la demande et une heure de réception par l'ordinateur distant (110) du fichier demandé.

8. Un système de fourniture d'un accès à des fichiers informatiques (102),
**caractérisé en ce que**
le système comprend :
un moteur de chiffrement (101) sur un ordinateur local (100) configuré de façon à :
recevoir (201), à partir d'un ordinateur distant (110), une demande d'accès à un fichier (102),
en réponse à la réception de la demande d'accès au fichier (102) à partir de l'ordinateur distant (110),
déterminer (203) un ou plusieurs paramètres de chaque élément parmi le fichier demandé (102), l'ordinateur distant (110) et un utilisateur (112) de l'ordinateur distant (110), les paramètres de l'ordinateur distant (110) comprenant un ou plusieurs éléments parmi un indicateur indiquant si un disque d'ordinateur est chiffré ou non chiffré, un type de chiffrement de disque et le niveau de sécurité de l'ordinateur, le niveau de sécurité de l'ordinateur distant (110) dépendant de la date de la dernière mise à jour de la base de données d'antivirus, de la présence de vulnérabilités non corrigées sur l'ordinateur, de la date de la dernière vérification par l'antivirus et du résultat de cette vérification ainsi que d'une liste d'applications installées,
déterminer (204), en fonction des paramètres déterminés de chaque élément parmi les fichiers demandés (102), l'ordinateur distant (110) et un utilisateur (112), une règle d'accès pour le fichier demandé (102) qui spécifie des exigences de chiffrement pour le fichier demandé (102), dans lequel le moteur de chiffrement (101) détermine la règle d'accès par l'application des paramètres déterminés à une pluralité de conditions et la détermination de la règle d'accès selon que les paramètres satisfont la pluralité de conditions,
transmettre (205) la règle d'accès déterminée au fichier demandé (102) à un moteur de chiffrement (111) de l'ordinateur distant (110), et
exécuter par l'application de la règle d'accès au fichier demandé (102), une opération parmi l'envoi du fichier demandé (102) en texte clair à l'ordinateur distant (110), l'envoi du fichier demandé (102) en texte chiffré à l'ordinateur distant (110), ou le refus d'accès au fichier demandé (102),
dans lequel, lorsque le fichier demandé (102) est envoyé sous la forme d'un texte chiffré en fonction de la règle d'accès, le moteur de chiffrement (111) de l'ordinateur distant (110) extrait une clé de fichier chiffré de métadonnées du fichier demandé (101) et transmet la clé de fichier chiffré à un centre de protection (120), et
dans lequel le centre de protection (120) est configuré de façon à déchiffrer la clé de fichier chiffré en fonction d'au moins une politique d'accès aux fichiers (121) et à transmettre la clé de fichier déchiffré au moteur de chiffrement (111) de l'ordinateur distant (110) de façon à déchiffrer et accéder au texte chiffré.

9. Le système selon la revendication 8, dans lequel les paramètres de l'utilisateur (112) de l'ordinateur distant (110) comprennent un ou plusieurs éléments parmi des droits de compte d'utilisateur et une fonction de l'utilisateur dans une compagnie.

10. Le système selon la revendication 8, dans lequel les paramètres du fichier demandé (102) comprennent un ou plusieurs éléments parmi un indicateur indiquant si le fichier (102) est chiffré ou non chiffré, un type de fichier, une somme de hachage du fichier (102) et un ou plusieurs attributs du fichier (102).

11. Le système selon la revendication 8, dans lequel le type de chiffrement de disque comprend un chiffrement parmi un chiffrement de disque complet (FDE) et un chiffrement de niveau fichier (FLE).

12. Le système selon la revendication 8, dans lequel le niveau de sécurité de l'ordinateur est en outre déterminé en fonction d'un nombre de programmes malveillants détectés et d'un nombre de programmes malveillants réparés ou supprimés.
